# EUROPEAN PATENT APPLICATION

(11) **EP 4 760 455 A1**
(43) Date of publication of application: **17.06.2026**
(21) Application number: 24867072.1
(22) Date of filing: 22.07.2024
(51) Int. Cl.: G06F 1/20

(54) **HEAT DISSIPATION MODULE, ELECTRONIC DEVICE, AND HEAT DISSIPATION METHOD**

(30) Priority: 21.09.2023 CN 202311229147
(71) Applicant: Honor Device Co., Ltd., Shenzhen, Guangdong 518040 (CN)
(72) Inventor: YANG, Yuanru, Shenzhen, Guangdong 518040 (CN); ZHANG, Heng, Shenzhen, Guangdong 518040 (CN); BIE, Yongchao, Shenzhen, Guangdong 518040 (CN); WANG, Xiaoyong, Shenzhen, Guangdong 518040 (CN); ZHANG, Xiao, Shenzhen, Guangdong 518040 (CN)
(74) Representative: MERH-IP Matias Erny Reichl Hoffmann Patentanwälte PartG mbB
(86) International application number: PCT/CN2024/106836
(87) International publication number: WO 2025/060655

(57) **Abstract**

This application relates to the technical field of electronic devices, and provides a heat dissipation module, an electronic device, and a heat dissipation method. The electronic device can have both a light and thin design and a heat dissipation performance. The heat dissipation module includes a heat conduction plate, a heat spreader, and a first flow channel. The heat conduction plate is configured to be in heat conduction connection to a heat generating element. The heat spreader is located on a side of the heat conduction plate facing away from the heat generating element and is in heat conduction connection to the heat conduction plate. The first flow channel is located between the heat conduction plate and the heat spreader, a part of an inner wall of the first flow channel is formed by the heat conduction plate, and a cooling medium is provided in the first flow channel.

## Description

This application claims priority to Chinese Patent Application No. 202311229147.3, filed with the China National Intellectual Property Administration on September 21, 2023 and entitled "HEAT DISSIPATION MODULE, ELECTRONIC DEVICE, AND HEAT DISSIPATION METHOD", which is incorporated herein by reference in its entirety.

### TECHNICAL FIELD

This application relates to the technical field of electronic devices, and in particular, to a heat dissipation module, an electronic device, and a heat dissipation method.

### BACKGROUND

With the development of electronic device technologies, users have increasingly high requirements on performance of an electronic device, for example, a notebook computer. However, a heat sink capability of the heat dissipation module directly determines a maximum power consumption level that can be reached by the electronic device, that is, performance of the electronic device. To improve a heat dissipation performance of the heat dissipation module, the volume of the heat dissipation module also has to be increased accordingly. In this way, the heat dissipation module occupies a large space, which is not beneficial to implementation of a light and thin design of the electronic device.

### SUMMARY

This application provides a heat dissipation module, an electronic device, and a heat dissipation method. The heat dissipation module can have both a light and thin design and a heat dissipation performance, which is beneficial to improvement in performance of the electronic device.

According to a first aspect, this application provides a heat dissipation module. The heat dissipation module includes a heat conduction plate, a heat spreader, and a first flow channel. The heat conduction plate is configured to be in heat conduction connection to a heat generating element. The heat spreader is located on a side of the heat conduction plate facing away from the heat generating element and is in heat conduction connection to the heat conduction plate. The first flow channel is located between the heat conduction plate and the heat spreader. The heat conduction plate has a first surface facing the heat spreader, the first flow channel extends on the first surface, a part of an inner wall of the first flow channel is formed by the first surface, and a cooling medium is provided in the first flow channel.

Compared with that the pipeline is disposed alone to form the first flow channel, in this embodiment, a heat conduction path does not need to pass through the pipeline used to form the first flow channel, and a part of the heat conduction plate forms the inner wall of the first flow channel, so that the heat conduction plate performs direct heat conduction with the cooling medium. In this way, the cooling medium can directly absorb heat on the heat conduction plate, the thermal resistance is smaller, and the heat dissipation efficiency is improved. Further, a part of the inner wall of the first flow channel is formed by the heat conduction plate, and only a part of the inner wall of the pipeline needs to be disposed alone and be connected to the heat conduction plate to form the first flow channel, thereby saving space occupied by the heat dissipation module, facilitating thinning and miniaturization of the heat dissipation module, and further facilitating thinning and miniaturization of the electronic device.

In a possible implementation of the first aspect, a part of the inner wall of the first flow channel is formed by the heat spreader. In this way, the cooling medium in the first flow channel may be further in direct contact with the heat spreader, and the heat of the cooling medium may be directly conducted to the heat spreader, so that the thermal resistance is smaller, and the heat dissipation efficiency is improved. Compared with that the heat conduction plate is directly in heat conduction connection to the heat spreader, in this embodiment, the first flow channel is added and is disposed between the heat conduction plate and the heat spreader. On the premise of maintaining the original heat conduction path, the cooling medium in the first flow channel may further absorb heat, thereby improving a heat dissipation effect of the heat dissipation module.

Compared with that the pipeline is disposed alone to form the first flow channel, in this embodiment, a heat conduction path does not need to pass through the pipeline used to form the first flow channel, and a part of the heat conduction plate and a part of the heat spreader form the inner wall of the first flow channel, so that the cooling medium performs direct heat conduction with the heat conduction plate and the heat spreader. In this way, the thermal resistance is smaller. Further, a part of the inner wall of the first flow channel is formed by the heat spreader, and only a part of the inner wall of the pipeline needs to be disposed alone and be connected to the heat conduction plate and the heat spreader separately to form the first flow channel, thereby saving space occupied by the heat dissipation module, facilitating thinning and miniaturization of the heat dissipation module, and further facilitating thinning and miniaturization of the electronic device.

In a possible implementation of the first aspect, a part of the inner wall of the first flow channel is formed by the heat spreader. In this way, the cooling medium in the first flow channel may be further in direct contact with the heat spreader, and the heat of the cooling medium may be directly conducted to the heat spreader, so that the thermal resistance is smaller, and the heat dissipation efficiency is improved.

In a possible implementation of the first aspect, the heat conduction plate has a first surface facing the heat spreader, the first surface is provided with a first groove, and an opening of the first groove faces the heat spreader. The heat spreader has a second surface facing the heat conduction plate, and the second surface covers the opening of the first groove and defines the first flow channel with the first groove. On the premise that the heat dissipation module is located in the electronic device and occupies a same space, disposition of the first groove can enlarge a volume of the first flow channel, so that a volume of the cooling medium in the first flow channel is larger, and in a process of using the electronic device, the cooling medium can absorb more heat, which is beneficial to improvement in the heat dissipation efficiency of the heat dissipation module, and further improving the use performance of the electronic device. On the premise of a particular volume of the first flow channel, disposition of the first groove can further reduce a space occupied by the heat dissipation module in the electronic device, which is beneficial to thinning and miniaturization of the heat dissipation module, and further beneficial to thinning and miniaturization of the electronic device.

In a possible implementation of the first aspect, the second surface is provided with a second groove, an orthographic projection of the second groove on the first surface overlaps the first groove, and the first groove and the second groove define the first flow channel. On the premise that the heat dissipation module is located in the electronic device and occupies a same space, disposition of the second groove can enlarge a volume of the first flow channel, so that a volume of the cooling medium in the first flow channel is larger, and in a process of using the electronic device, the cooling medium can absorb more heat, which is beneficial to improvement in the heat dissipation efficiency of the heat dissipation module, and further improving the use performance of the electronic device. On the premise of a particular volume of the first flow channel, disposition of the second groove can further reduce a space occupied by the heat dissipation module in the electronic device, which is beneficial to thinning and miniaturization of the heat dissipation module, and further beneficial to thinning and miniaturization of the electronic device.

In a possible implementation of the first aspect, the heat conduction plate has a first surface facing the heat spreader. The heat spreader has a second surface facing the heat conduction plate, the second surface is provided with a second groove, an opening of the second groove faces the heat conduction plate, the first surface covers the opening of the second groove and forms a closed cavity with the second groove, and the closed cavity forms the first flow channel.

In a possible implementation of the first aspect, a second flow channel is formed in the heat conduction plate, and all of an inner wall of the second flow channel is formed by the heat conduction plate. The second flow channel is in communication with the first flow channel. In this way, the heat dissipation module is provided with a plurality of groups of flow channels to absorb heat, that is, the first flow channel and the second flow channel jointly absorb heat, thereby improving the heat dissipation efficiency of the heat dissipation module, and further improving the use performance of the electronic device.

In a possible implementation of the first aspect, at least a part of the second flow channel and the first flow channel are spaced apart in a thickness direction of the heat conduction plate. In this way, the heat dissipation module is provided with a plurality of groups of flow channels to absorb heat, that is, the first flow channel and the second flow channel jointly absorb heat, thereby improving the heat dissipation efficiency of the heat dissipation module, and further improving the use performance of the electronic device.

In a possible implementation of the first aspect, the heat conduction plate includes a first part and a second part that are stacked, the first part is located on a side of the second part that faces away from the heat spreader, a thickness of the first part is greater than or equal to 0.5 micrometer, and the first flow channel is located on the second part. The heat of the heat generating element is first conducted to the first part, and the first part conducts the heat to the whole heat conduction plate. That is, the heat is conducted to the second part by using the first part, and the second part is used to form the first flow channel and the second flow channel. The cooling medium in the first flow channel and the second flow channel absorbs the heat to implement heat dissipation. In this way, improvement in efficiency of heat conduction of the heat generating element is facilitated, to improve efficiency of heat dissipation of the heat dissipation module, thereby further improving the use performance of the electronic device.

In a possible implementation of the first aspect, a thickness of the first part in a first direction is greater than or equal to 0.5 micrometer.

In a possible implementation of the first aspect, a third flow channel is formed in the heat spreader, and the third flow channel is in communication with the first flow channel. In this way, the heat dissipation module is provided with a plurality of groups of flow channels to absorb heat, that is, the first flow channel, the second flow channel, and the third flow channel jointly absorb heat, thereby improving the heat dissipation efficiency of the heat dissipation module, and further improving the use performance of the electronic device.

In a possible implementation of the first aspect, the first flow channel is serpentine or spiral. In this way, in a limited volume, the serpentine or spiral flow channel can further increase volumes of the first flow channel, the second flow channel, and the third flow channel, and further increase a volume of the cooling medium. Therefore, the heat dissipation efficiency of the heat dissipation module is further improved, which helps improve the use performance of the electronic device.

In a possible implementation of the first aspect, the first flow channel includes a plurality of sub-segments that are in communication with each other, and the sub-segments extend along an extension path of the heat spreader. In this way, compared with that the first flow channel extends along another direction of the heat spreader, that the first flow channel extends along the extension path of the heat spreader can increase a length of each sub-segment of the first flow channel, thereby reducing process difficulty.

In a possible implementation of the first aspect, the heat conduction plate further includes a liquid inlet channel and a liquid outlet channel, the liquid inlet channel and the liquid outlet channel are separately in communication with the first flow channel, the liquid inlet channel runs through the first surface and the third surface, and the liquid outlet channel runs through the first surface and the third surface.

In a possible implementation of the first aspect, the heat dissipation module further includes a drive apparatus, and the drive apparatus is configured to drive the cooling medium to circulate. In this way, the cooling medium absorbs heat, so that heat of the heat conduction plate is reduced, and the drive apparatus drives the cooling medium to circulate in the first flow channel, the second flow channel, and the third flow channel, thereby accelerating heat transfer.

In a possible implementation of the first aspect, the heat dissipation module further includes a first connection pipeline, at least two heat conduction plates are provided, and first flow channels of adjacent heat conduction plates are in communication with each other by using the first connection pipeline. In this way, a first flow channel is disposed on each of a plurality of heat conduction plates, and the heat on the heat conduction plates is jointly absorbed by using a plurality of first flow channels, so that a total volume of the first flow channels is further increased, a volume of the cooling medium in the first flow channels is also larger, and the first flow channels jointly absorb more heat, thereby improving the heat dissipation efficiency of the heat dissipation module, and further improving the use performance of the electronic device.

In a possible implementation of the first aspect, the heat dissipation module further includes a heat sink, the heat spreader includes an evaporation segment and a condensation segment, the evaporation segment is in heat conduction connection to the heat conduction plate, and the condensation segment is in heat conduction connection to the heat sink. In this way, the first flow channel extends to the heat sink, and the heat sink dissipates heat from the cooling medium in the first flow channel, thereby further improving the heat dissipation efficiency of the heat dissipation module, and further improving the use performance of the electronic device.

In a possible implementation of the first aspect, the heat dissipation module further includes a second connection pipeline, the second connection pipeline is located between the condensation segment and the heat sink, and the second connection pipeline is in communication with the first flow channel.

In a possible implementation of the first aspect, the heat sink includes a plurality of heat-dissipation fins, and the plurality of heat-dissipation fins are spaced apart. This is beneficial to enlarging a heat dissipation area of the heat sink, and further can improve a heat dissipation performance of the heat dissipation module, to improve the performance of the electronic device.

In a possible implementation of the first aspect, the heat dissipation module further includes a fan, and the heat sink is located at a fan outlet of the fan. In this way, after exchanging heat with the heat sink, an air flow blown from the fan outlet can be directly blown to a heat dissipation hole, reducing flow resistance of the air flow, and helping reduce noise of the heat dissipation module. In addition, the heat exchange efficiency between the air flow and the heat sink can be improved, thereby further improving the heat dissipation performance of the heat dissipation module.

According to a second aspect, this application further provides a heat dissipation module. The heat dissipation module includes a heat conduction plate, a heat spreader, and a first flow channel. The heat conduction plate is configured to be in heat conduction connection to a heat generating element. The heat spreader is located on a side of the heat conduction plate facing away from the heat generating element and is in heat conduction connection to the heat conduction plate. The first flow channel is located between the heat conduction plate and the heat spreader, a part of an inner wall of the first flow channel is formed by the heat spreader, and a cooling medium is provided in the first flow channel.

According to a third aspect, this application further provides an electronic device. The electronic device includes a housing, a heat generating element, and the foregoing heat dissipation module, where the housing has an accommodating space. The heat generating element is disposed in the accommodating space. The heat conduction plate of the heat dissipation module is in heat conduction connection to the heat generating element.

In a possible implementation of the third aspect, the electronic device further includes a circuit board, the heat generating element is disposed on the circuit board, and the heat generating element includes a CPU and a GPU.

According to a fourth aspect, this application further provides a heat dissipation method. The heat dissipation method is applied to the foregoing electronic device. The method includes:
controlling, when the electronic device enters an overclocking mode, the drive apparatus to start, and driving, by the drive apparatus, the cooling medium to flow in the first flow channel;
obtaining a first temperature, where the first temperature is a temperature of one of the accommodating space, the heat generating element, the heat conduction plate, and the heat spreader;
determining whether the first temperature reaches a threshold temperature;
stopping, by the drive apparatus, working if the first temperature is less than the threshold temperature; and continuing, by the drive apparatus, to work if the first temperature is greater than the threshold temperature.

In a possible implementation of the fourth aspect, the threshold temperature is greater than or equal to 50 degrees and less than or equal to 80 degrees.

### BRIEF DESCRIPTION OF DRAWINGS

FIG. 1 is a schematic structural diagram of an electronic device according to some embodiments of this application;
FIG. 2 is a three-dimensional view of a keyboard host of the electronic device shown in FIG. 1;
FIG. 3 is a cross-sectional view of the three-dimensional view shown in FIG. 2 that is taken along a line A-A;
FIG. 4 is a schematic structural diagram of a heat dissipation module when the keyboard host 2 shown in FIG. 3 is viewed from a direction F1;
FIG. 5A is a schematic structural diagram of a heat conduction structure in the heat dissipation module shown in FIG. 4;
FIG. 5B is a schematic structural diagram of a heat conduction plate in the heat conduction structure shown in FIG. 5A;
FIG. 5C is a schematic structural diagram of some other heat conduction structures according to still other embodiments of this application;
FIG. 6 is a segmental view along a line B-B in FIG. 5A;
FIG. 7 is a schematic structural diagram of a heat dissipation module according to some embodiments of this application;
FIG. 8 is a schematic structural diagram of a liquid cooling apparatus shown in FIG. 7 and cut along a line C-C;
FIG. 9 is a schematic structural diagram of still another heat conduction plate of the heat dissipation module shown in FIG. 5A;
FIG. 10 is a schematic structural diagram of still another heat conduction plate of the heat dissipation module shown in FIG. 5A;
FIG. 11 is a schematic structural diagram of yet another heat spreader of the heat dissipation module shown in FIG. 5A;
FIG. 12 is a schematic structural diagram of yet another heat conduction plate of the heat dissipation module shown in FIG. 5A;
FIG. 13 is a main view of a heat conduction plate of the heat dissipation module shown in FIG. 5A;
FIG. 14 is a schematic structural diagram of yet another heat spreader of the heat dissipation module shown in FIG. 5A;
FIG. 15A is a schematic structural diagram of yet another heat conduction plate of the heat dissipation module shown in FIG. 5A;
FIG. 15B is a schematic structural diagram of yet another heat conduction plate of the heat dissipation module shown in FIG. 5A;
FIG. 15C is a schematic structural diagram of yet another heat conduction plate of the heat dissipation module shown in FIG. 5A;
FIG. 15D is a schematic structural diagram of a heat dissipation module according to some other embodiments of this application;
FIG. 16A is a schematic structural diagram of yet another heat conduction plate of the heat dissipation module shown in FIG. 5A;
FIG. 16B is a schematic structural diagram of a back side of one heat conduction plate shown in FIG. 16A;
FIG. 16C is a schematic structural diagram of a connection between a heat conduction plate and a drive apparatus according to some embodiments of this application;
FIG. 16D is a schematic structural diagram of yet another heat conduction plate of the heat dissipation module shown in FIG. 5A;
FIG. 17 is a schematic structural diagram of a heat sink in the heat dissipation module shown in FIG. 4;
FIG. 18 is a schematic structural diagram of a fan in the heat dissipation module shown in FIG. 4; and
FIG. 19 is a comparison diagram of a temperature rise time for a CPU to reach a limiting temperature when an electronic device of this application has or does not have the foregoing heat dissipation module.

### Reference numerals:

100: electronic device; 1: display; 2: keyboard host;
21: housing; 21a: accommodating space; 211: housing C; 212: housing D;
22: middle plate; 23: keyboard; 231: fixing plate; 232: key; 24: mainboard;
25: heat dissipation module; 251: heat conduction structure; 2511: heat conduction plate; 2511a: first surface; A1: first region; A2: second region; a: first part; b: second part: 2511b: third surface; 2511c: first groove;
2511c: first heat conduction plate; 2511d: second heat conduction plate; 2511e: first connection pipeline; 2511f: third region; 2511g: fourth region; 2511h: step portion;
2512: heat spreader; 2512a: pipe case; 2512b: liquid absorption wick; 2512c: end cover; 2512d: evaporation segment; 2512e: condensation segment; 2512f: condensation segment; 2512g: working liquid; 2512h: second surface; 2512i: second groove;
C: third region; D: fourth region; 252: heat sink; 252a: heat dissipation base; 252b: heat dissipation fin; 252c: heat dissipation channel; 253: fan; 2531: fan outlet;
26: first flow channel; 26a: liquid inlet; 26b: liquid outlet; 26c: sub-segment;
261: second flow channel; 263: third flow channel; 27: liquid cooling apparatus; 271: pipeline; 272: flow channel; 273: cooling medium; 28: drive apparatus; 281: inlet; 282: outlet; 283: liquid inlet pipeline; 284: liquid outlet pipeline; and 3: heat generating element.

### DESCRIPTION OF EMBODIMENTS

In embodiments of this application, terms "first", "second", "third", and "fourth" are used merely for a purpose of description, and shall not be construed as indicating or implying relative importance or implying a quantity of indicated technical features. Therefore, features defined with "first", "second", "third", and "fourth" may explicitly or implicitly include one or more such features.

In embodiments of this application, the terms "include", "include", and any variants thereof are intended to cover a non-exclusive inclusion. Therefore, a process, method, object, or apparatus that includes a series of elements not only includes such elements, but also includes other elements not specified expressly, or may include inherent elements of the process, method, object, or apparatus. Without more limitations, elements defined by a sentence "including a..." does not exclude that there are still other same elements in the process, method, item, or apparatus.

In embodiments of this application, "and/or" is merely an association describing associated objects, and indicates that three relationships may exist. For example, A and/or B may indicate the following three cases: Only A exists, both A and B exist, and only B exists. In addition, the character "/" in this specification generally represents an "or" relationship between the associated objects.

This application provides an electronic device. The electronic device is an electronic device having a heat dissipation module. Specifically, the electronic device includes, but is not limited to, electronic devices such as a mobile phone, a tablet personal computer (tablet personal computer), a laptop computer (laptop computer), a personal digital assistant (personal digital assistant, PDA), a personal computer, a notebook (notebook) computer, an in-vehicle device, and a wearable device.

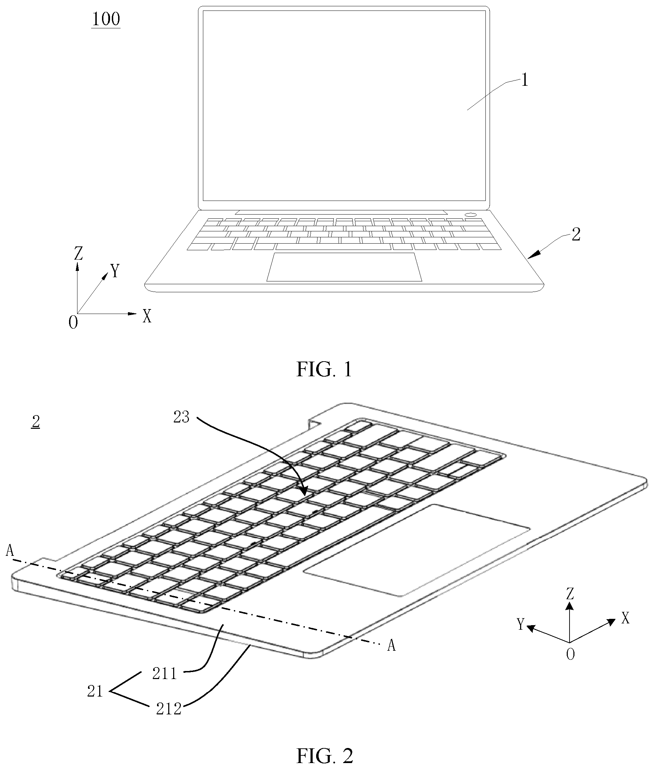

Referring to FIG. 1, FIG. 1 is a schematic structural diagram of an electronic device 100 according to some embodiments of this application. In this embodiment, the electronic device 100 is a notebook computer. Specifically, the electronic device 100 includes a display 1 and a keyboard host 2.

The display 1 is configured to display an image, a video, and the like. The keyboard host 2 is rotatably connected to the display 1. The keyboard host 2 is configured to: input an instruction and data, and control, based on the input instruction and data, the display 1 to display an image or a video. In addition, the keyboard host 2 is further configured to play voice or music.

The electronic device 100 can switch between an open state and a closed state. When the electronic device 100 is in the open state, an included angle between the display 1 and the keyboard host 2 is greater than 0 degrees and less than 180 degrees. When the electronic device 100 is in the closed state, the display 1 covers the keyboard host 2, and a display surface of the display 1 is opposite to a keyboard surface of the keyboard host 2.

To facilitate description of each embodiment below, an XYZ coordinate system is established for the keyboard host 2. Specifically, an extending direction of a rotation axis of the keyboard host 2 and the display 1 is defined as an X-axis direction; a thickness direction of the keyboard host 2 is defined as a Z-axis direction; and a direction perpendicular to both the X-axis direction and the Z-axis direction is defined as a Y-axis direction. It may be understood that the coordinate system for the keyboard host 2 may be flexibly set based on actual requirements. This is not specifically limited herein.

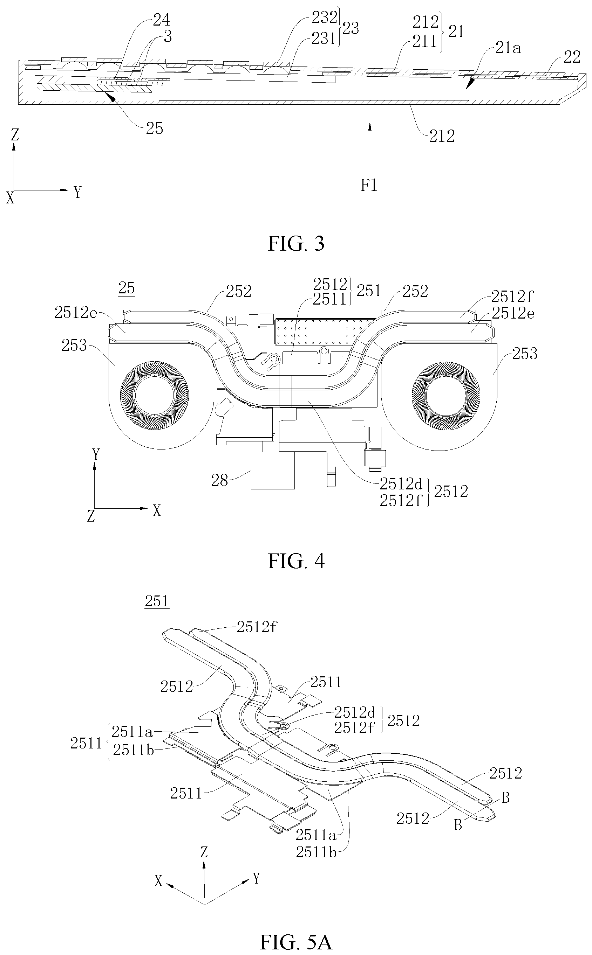

Referring to FIG. 2, FIG. 2 is a three-dimensional view of the keyboard host 2 of the electronic device 100 shown in FIG. 1. FIG. 3 is a cross-sectional view of the three-dimensional view shown in FIG. 2 that is taken along a line A-A. It should be noted that "in an A-A line" means a plane in which the A-A line is located. Descriptions of similar drawings are to be understood similarly, and details are not described herein. In this embodiment, the keyboard host 2 includes a housing 21, a middle plate 22, a keyboard 23, a mainboard 24, and a heat dissipation module 25.

It should be noted that FIG. 2 and FIG. 3 merely show examples of some components included in the keyboard host 2. Actual shapes, actual sizes, actual positions, and actual structures of these components are not limited by FIG. 2, FIG. 3, and the following accompanying drawings.

The housing 21 is configured to protect an internal structure of the keyboard host 2. The housing 21 may be an integrated structure, or may be formed by assembling a plurality of parts. In some embodiments, referring to FIG. 2 and FIG. 3, the housing 21 includes a housing C (palm rest cover) 211 and a housing D (bottom cover) 212. The housing C 211 is coupled with the housing D 212 to define an internal accommodating space 21a of the housing 21 in a surrounding manner. The housing C 211 and the housing D 212 may be secured to each other via clamping, gluing, or threaded connection. This is not specifically limited herein.

The middle plate 22 is located in the internal accommodating space 21a of the housing 21. The middle plate 22 is secured to an inner surface of the housing C 211 in a manner of gluing, clamping, threaded connection, riveting, or the like. In another embodiment, the middle plate 22 may also be secured to an inner surface of the housing D 212. A material of the middle plate 22 includes, but is not limited to, plastic and metal. The middle plate 22 is used as a support "skeleton" of electronic components in the keyboard host 2. The keyboard 23 and the heat dissipation module 25 are secured to the middle plate 22 directly or indirectly.

The keyboard 23 is configured to input an instruction or data. The keyboard 23 includes a fixing plate 231 and a plurality of keys 232 connected to the fixing plate 231. Referring to FIG. 3, the fixing plate 231 is secured to the middle plate 22.

The mainboard 24 is configured to integrate a control chip. The control chip may include a central processing unit (central processing unit, CPU), a graphics processing unit (graphics processing unit, GPU), an application processor (application processor, AP), a double data rate (double data rate, DDR) synchronous dynamic random access memory, a universal flash storage (UFS), or the like.

The heat dissipation module 25 is disposed in the accommodating space 21a. The heat dissipation module 25 is configured to dissipate heat from a heat generating element 3 in the electronic device 100, to ensure normal operating of the electronic device 100. For example, the heat generating element 3 may include, but is not limited to, the CPU and the GPU on the mainboard 24, and various types of chips in the electronic device 100. That is, the heat dissipation module 25 may be configured to reduce a temperature of at least one of the CPU and the GPU on the mainboard 24 and the various types of chips in the electronic device 100. Referring to FIG. 3, the heat dissipation module 25 is fixed on the mainboard 24, and is in heat conduction connection to the CPU, the GPU, and the various types of chips.

The following describes the heat dissipation module 25 in detail.

Referring to FIG. 4, FIG. 4 is a schematic structural diagram of a heat dissipation module 25 when the keyboard host 2 shown in FIG. 3 is viewed from a direction F1. The heat dissipation module 25 includes a heat conduction structure 251 and a heat sink 252. The heat conduction structure 251 is in heat conduction connection to the heat generating element 3. Specifically, the heat conductive structure 251 may be connected to the heat generating element 3 in a manner such as soldering, bonding, screwing, or riveting. The heat conduction structure 251 may be in heat conduction connection to the heat generating element 3 in a direct contact manner. Alternatively, the heat conduction structure 251 may be in heat conduction connection to the heat generating element 3 by disposing a heat transfer structure therebetween. The heat transfer structure may be a thermally conductive silicone grease, a thermally conductive adhesive, or the like. This embodiment and the following embodiments are described by using an example in which the heat conduction structure 251 may be in heat conduction connection to the heat generating element 3 in a direct contact manner. The heat conduction structure 251 is configured to conduct heat of the heat generating element 3 to the heat sink 252. In this way, when the electronic device 100 operates, heat generated by the heat generating element 3 may be transferred to the heat sink 252 by using the heat conduction structure 251, and the foregoing heat is discharged to the outside of the electronic device 100 by using the heat sink 252.

Referring to FIG. 4 and FIG. 5A together, FIG. 5A is a schematic structural diagram of a heat conduction structure 251 in the heat dissipation module 25 shown in FIG. 4. The heat conduction structure 251 includes a heat conduction plate 2511 and a heat spreader 2512. The heat conduction plate 2511 is in heat conduction connection to the heat generating element 3, and the heat conduction plate 2511 is in heat conduction connection to the heat spreader 2512. Optionally, the material of the heat conduction plate 2511 may be metal. Specifically, the material of the heat conduction plate 2511 may be silver, copper, aluminum, zinc, or the like. The foregoing materials all have good heat conduction properties. In this embodiment, an example in which the material of the heat conduction plate 2511 is copper is used for description. However, this does not specifically limit this application. The metal copper has a good heat conduction property and a high ductility. Making the heat conduction plate 2511 by using a metal copper material can thin the heat conduction plate 2511 while ensuring the heat conduction property of the heat conduction plate 2511, to reduce the space occupied by the heat conduction plate 2511, thereby taking both the heat dissipation efficiency and the light and thin design of the electronic device 100 into consideration.

Still referring to FIG. 5A, the heat conduction plate 2511 may be formed into a sheet structure. The heat conduction plate 2511 may have a structure in a shape such as a square shape, an ellipse shape, a circle shape, a racetrack shape, or a special shape. The specific shape of the heat conduction plate 2511 is not limited in this application. The heat generating element 3 includes a fourth surface, and the fourth surface faces the heat conduction plate 2511. The fourth surface is in direct contact with the heat conduction plate 2511 to implement a heat conduction connection between the heat generating element 3 and the heat conduction plate 2511. An orthographic projection of the heat generating element 3 on a plane in which the heat conduction plate 2511 is located may be located in the heat conduction plate 2511, to ensure that all of the fourth surface can be in direct contact with the heat conduction plate 2511. In this way, it can be ensured that there is a sufficient contact area between the heat generating element 3 and the heat conduction plate 2511, so that the heat of the heat generating element 3 can be quickly transferred to the heat sink 252 through the heat conduction structure 251, which is beneficial to improvement in the heat dissipation efficiency.

The heat conduction plate 2511 may be fixed on the mainboard 24, and is in heat conduction connection to the CPU, the GPU, and the like on the mainboard 24. Still referring to FIG. 5A, the heat conduction plate 2511 includes a first surface 2511a and a third surface 2511b that are opposite to each other. The heat conduction plate 2511 is located between the heat generating element 3 and the heat spreader 2512. The first surface 2511a faces the heat spreader, and the third surface 2511b faces the heat generating element 3. The heat conduction plate 2511 is separately in heat conduction connection to the heat spreader 2512 and the heat generating element 3. For example, the heat conduction plate 2511 may be fixed to the mainboard 24 through gluing, snap-fit, threaded connection, or the like.

A plurality of heat conduction plates 2511 may be disposed, and the quantity of heat conduction plates 2511 is determined according to the quantity and positions of heat generating elements 3. The quantity of heat conduction plates 2511 in the heat dissipation module 25 shown in FIG. 5A is two. The two heat conduction plates 2511 are spaced apart in the accommodating space, and positions of the two heat conduction plates 2511 are set according to positions of different heat generating elements 3. However, this does not specifically limit this application. In some other embodiments, the quantity of heat conduction plates 2511 may alternatively be three, four, five, or the like.

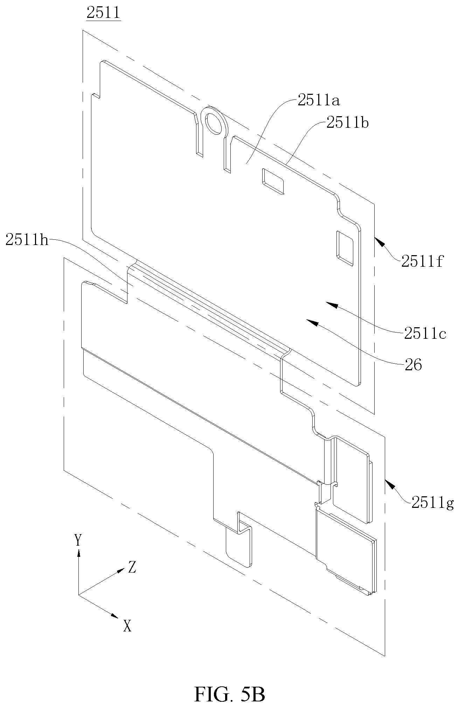

Referring to FIG. 5B, FIG. 5B is a schematic structural diagram of a heat conduction plate 2511 in the heat conduction structure 251 shown in FIG. 5A. One of the heat conduction plates 2511 is used as an example for description. As described above, to improve the heat conduction efficiency between the heat generating element 3 and the heat conduction plate 2511, heat conduction connection is implemented between the heat generating element 3 and the heat conduction plate 2511 through direct contact. Because different heat generating elements 3 have different thicknesses, after the heat conduction plate 2511 comes into contact with fourth surfaces of the heat generating elements 3, parts of the heat conduction plate 2511 are in different planes. That is, heights of the parts of the heat conduction plate 2511 on the Z axis are different. Therefore, the heat conduction plate 2511 is not an absolutely flat plate-shaped structure.

Specifically, after the heat conduction plate 2511 comes into contact with the heat generating elements 3, according to different heights of the heat conduction plate 2511 in the direction of the Z axis, the heat conduction plate 2511 may include a third region 2511f and a fourth region 2511g. The third region 2511f is in contact with a heat generating element 3 having a small thickness, the fourth region 2511g is in contact with a heat generating element 3 having a large thickness, and a height difference is formed between the third region 2511f and the fourth region 2511g. The heat conduction plate 2511 further includes a step portion 2511h, and the step portion 2511h is disposed between the third region 2511f and the fourth region 2511g, to integrally connect regions of the heat conduction plate 2511 having different heights.

Referring to FIG. 4 and FIG. 5A together, the heat spreader 2512 includes an evaporation segment 2512d and a condensation segment 2512f, and the condensation segment 2512f is located at two ends of the evaporation segment 2512d in an extension direction. The evaporation segment 2512d is in heat conduction connection to the heat conduction plate 2511, and the condensation segment 2512f is in heat conduction connection to the heat sink 252. Specifically, an orthographic projection of the evaporation segment 2512d in the direction of the Z axis overlaps the heat conduction plate 2511, and an orthographic projection of the condensation segment 2512f in the Z axis overlaps the heat sink 252. In this way, the heat of the heat generating element 3 is transferred to the heat conduction plate 2511, the heat of the heat conduction plate 2511 is transferred to the evaporation segment 2512d of the heat spreader 2512, and the heat of the evaporation segment 2512d is transferred to the condensation segment 2512f, and then is transferred to the heat sink 252 through the condensation segment 2512f, which is beneficial to improvement in the heat dissipation efficiency.

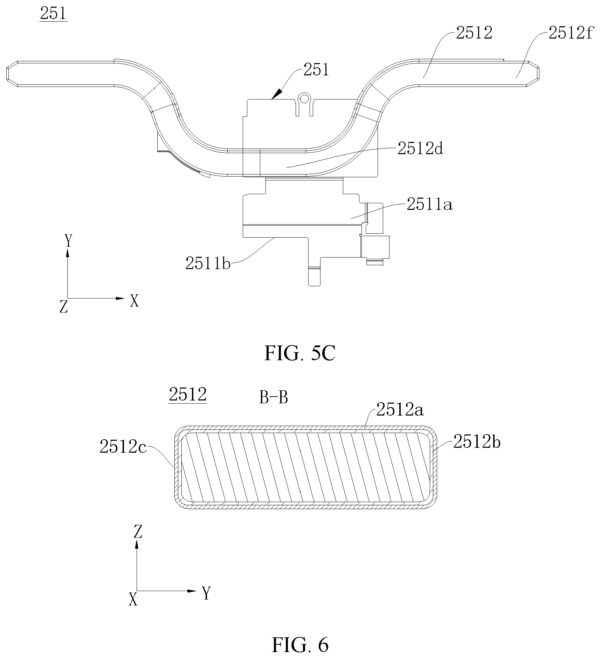

FIG. 5A is described by using an example in which both the quantity of heat conduction plates 2511 and the quantity of heat spreaders 2512 are two. Referring to FIG. 5C, FIG. 5C is a schematic structural diagram of some other heat conduction structures 251 according to still other embodiments of this application. The heat conduction structure 251 in FIG. 5C includes only one heat spreader 2512 and one heat conduction plate 2511. In this way, the heat dissipation module 25 can be prevented from occupying an excessively large space, facilitating lightening and thinning of the electronic device 100.

The heat spreader 2512 may be a heat pipe or a heat sharing plate. In some embodiments, referring to FIG. 6, FIG. 6 is a segmental view along a line B-B in FIG. 5A. In this embodiment, the heat spreader is a heat pipe. The heat pipe includes a pipe case 2512a, a liquid absorption wick 2512b, and an end cover 2512c. The pipe case 2512a is formed into a hollow structure, and the liquid absorption wick 2512b covers an inner pipe wall of the pipe case 2512a. A negative pressure is drawn in the pipe and then the pipe is filled with an appropriate amount of working liquid, so that after a capillary material of the liquid absorption wick clinging to the inner pipe wall is filled with the liquid, the pipe is sealed by using the end cover 2512c. When one end (that is, the evaporation segment) of the heat pipe is heated, the liquid in the liquid absorption wick evaporates and vaporizes, the vapor flows to the other end (that is, the condensation segment) under a small pressure difference, releases heat and condenses into liquid, and then the liquid flows back to the evaporation segment along the porous material under the action of capillary force. In such a circular operation, heat is rapidly transferred, and is evenly distributed to the heat sink 252, and then the heat is dissipated through the air, thereby improving the heat dissipation efficiency of the electronic device 100 to some extent.

In some embodiments, still referring to FIG. 6, the heat pipe is formed into a flat pipe. The "flat pipe" refers to a sheet-shaped or plate-shaped heat pipe. That is, the heat pipe has a small thickness in a thickness direction, that is, in the direction of the Z axis in FIG. 6. In this way, the space occupied by the heat pipe in the direction of the Z axis can be reduced, which is beneficial to implementation of a light and thin design of the electronic device.

In some other embodiments, the heat spreader 2512 may alternatively be a heat sharing plate. The heat spreader 2512 is a vacuum cavity whose inner wall has a fine structure. The heat spreader 2512 is made of copper, and the vacuum cavity is filled with a cooling liquid. When heat is conducted from a heat source to the evaporation segment, after the cooling liquid in the vacuum cavity is heated in an environment with a low vacuum level, the cooling liquid starts to be gasified. In this case, heat energy is absorbed and the volume of the cooling liquid rapidly expands. The entire vacuum cavity is rapidly filled with the cooling medium in the gas phase. When the working medium in the gas phase comes into contact with a cool region, the working medium in the gas phase is condensed. Through the phenomenon of condensation, heat accumulated during the evaporation is released, and the condensed cooling liquid returns to the condensation heat source through the micro-structured capillarity channel. This operation is repeatedly performed in the cavity, heat is rapidly transferred, and is evenly distributed to the heat sink 252, and then the heat is dissipated through the air, thereby improving the heat dissipation efficiency of the electronic device to some extent.

To further improve the heat dissipation effect of the electronic device 100, the heat dissipation module 25 may further include a liquid cooling apparatus 27. The heat dissipation module 25 improves the heat dissipation effect by adding the liquid cooling apparatus 27. Specifically, the liquid cooling apparatus 27 may be in heat conduction connection to the heat generating element 3, or may be in heat conduction connection to the heat conduction plate 2511, to directly or indirectly absorb heat of the heat generating element 3, thereby improving the heat dissipation effect of the heat dissipation module 25, and further improving the use performance of the electronic device 100.

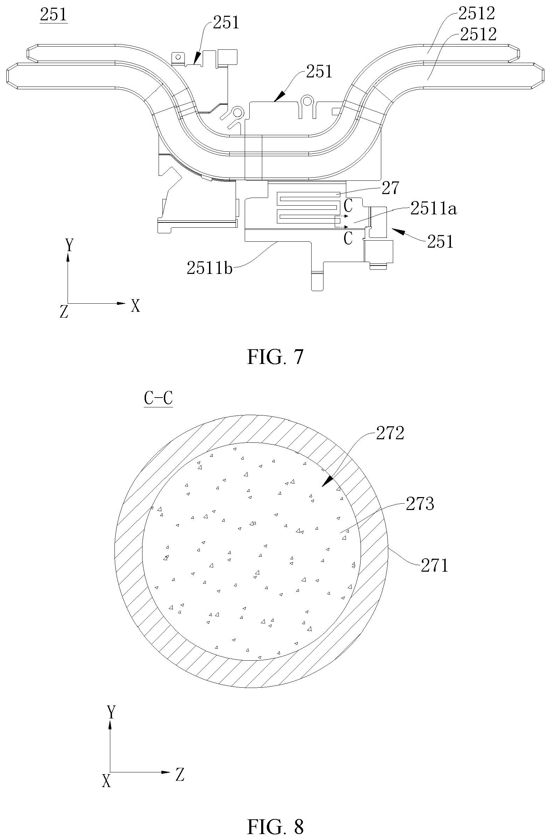

The following further describes the liquid cooling apparatus 27. Referring to FIG. 7 and FIG. 8, FIG. 7 is a schematic structural diagram of a heat dissipation module 25 according to some embodiments of this application. FIG. 8 is a schematic structural diagram of a liquid cooling apparatus 27 shown in FIG. 7 and cut along a line C-C. For example, the liquid cooling apparatus 27 may be in heat conduction connection to the heat conduction plate 2511. Specifically, the liquid cooling apparatus 27 may be in contact connection to the first surface 2511a of the heat conduction plate 2511, and is fixed to the heat conduction plate 2511. The liquid cooling apparatus 27 may be fixed to the heat conduction plate 2511 through soldering, bonding, or detachable connection. The liquid cooling apparatus 27 may include a pipeline 271 and a flow channel 272 disposed in the pipeline 271. The flow channel 272 is provided with a cooling medium 273, and heat of the heat generating element 3 is directly or indirectly absorbed by using the cooling medium 273.

The liquid cooling apparatus 27 may be continuously used in a normal working state of the electronic device 100, or may be used only in a high-power-consumption working mode. It should be noted that, the "high-power-consumption working mode" means that, in this working mode, the electronic device 100 instantaneously increases power consumption of the CPU, to improve computing power of the CPU, thereby improving use performance of the electronic device 100. If the electronic device 100 instantaneously increases power consumption of the CPU, a temperature of the chip is quickly increased. When the temperature of the electronic device 100 reaches a limiting temperature, the electronic device 100 stops the high-power-consumption working mode. Under a limitation of temperature, the high-power-consumption working mode of the electronic device 100 lasts for a short time, affecting use performance of the electronic device 100. For example, the high-power-consumption working mode may be an overclocking mode of the electronic device 100. The "overclocking mode" means that the electronic device 100 increases working frequencies of the CPU and the video card, and works in a state of a high frequency, to increase a working speed of the computer.

In the high-power-consumption working mode, the liquid cooling apparatus 27 may delay time taken for the temperature of the electronic device 100 to increase to the limiting temperature, thereby prolonging time in which the electronic device 100 is in the high-power-consumption working mode, and improving performance of the electronic device 100.

It should be noted that, the foregoing merely lists, by way of example, the working effect of the liquid cold apparatus 27 when the electronic device 100 is in the high-power-consumption working mode. However, this does not specifically limit this application. That is, in addition, the liquid cold apparatus 27 may also be used in another working mode of the electronic device 100, and the liquid cold apparatus 27 may further improve the heat dissipation effect of the electronic device 100, thereby improving the working performance of the electronic device 100.

However, a part of the accommodating space 21a of the electronic device 100 may be occupied when the liquid cooling apparatus 27 is disposed on the heat conduction plate 2511, that is, the liquid cooling apparatus 27 projects from a part of the first surface 2511a. With development of thinning and miniaturization of an electronic device 100, the accommodating space 21a of the electronic device 100 is increasingly small, and it is more difficult to mount the liquid cold apparatus 27 in the smaller accommodating space 21a. If the accommodating space 21a is enlarged to reduce the difficulty of mounting the liquid cooling apparatus 27, thinning and miniaturization of the electronic device 100 cannot be satisfied. In addition, a heat conduction path of conducting the heat of the heat generating element 3 to the liquid-cooling apparatus 27 is: the heat of the heat generating element 3 is first conducted to the heat conduction plate 2511, the heat of the heat conduction plate 2511 is then conducted to the pipeline 271 of the liquid-cooling apparatus 27, and after passing through the inner wall of the pipeline 271, the heat is conducted to the cooling medium 273 inside the pipeline; and the heat of the heat generating element 3 is absorbed by using the cooling medium 273. Through the foregoing heat conduction process, heat needs to pass through a plurality of elements, and further, the thermal resistance in heat conduction also increases accordingly. The "thermal resistance" refers to a resistance encountered when heat is transferred inside an object through heat conduction, and also becomes a heat conduction resistance. A larger thermal resistance indicates lower heat transfer efficiency.

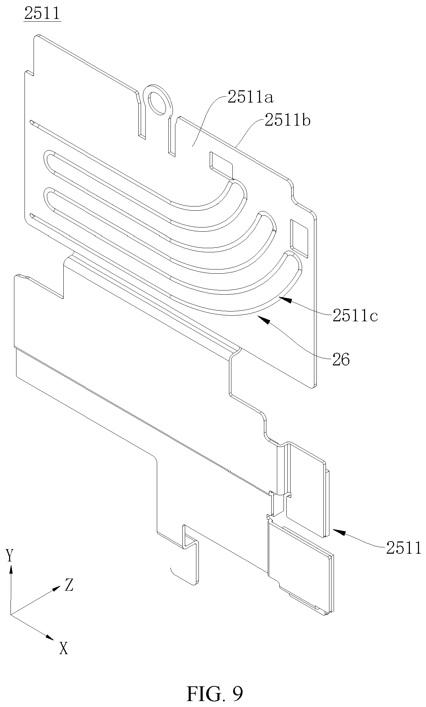

To resolve the foregoing problem, referring to FIG. 9, FIG. 9 is a schematic structural diagram of still another heat conduction plate 2511 of the heat dissipation module 25 shown in FIG. 5A. This application further provides a heat dissipation module 25, and a difference between the heat dissipation module 25 in this embodiment and the foregoing heat dissipation module 25 lies in that the heat dissipation module 25 in this embodiment further includes a first flow channel 26. Details are as follows: The heat dissipation module 25 includes a heat conduction plate 2511, a heat spreader 2512, and a first flow channel 26. The heat conduction plate 2511 is configured to be in heat conduction connection to a heat generating element 3. The heat spreader 2512 is located on a side of the heat conduction plate 2511 facing away from the heat generating element 3 and is in heat conduction connection to the heat conduction plate 2511. Positions, shapes, and structural constructions of the heat spreader 2512 and the heat conduction plate 2511 are the same as those of the heat spreader 2512 and the heat conduction plate 2511 that are described above, and details are not described herein again.

The first flow channel 26 is located between the heat conduction plate 2511 and the heat spreader 2512, a part of an inner wall of the first flow channel 26 is formed by the heat conduction plate 2511, the first flow channel 26 extends on a first surface 2511a, and a cooling medium 273 is disposed in the first flow channel 26. Compared with that the pipeline 271 is disposed alone to form the first flow channel 26, in this embodiment, a heat conduction path does not need to pass through the pipeline 271 used to form the first flow channel 26, and a part of the heat conduction plate 2511 forms the inner wall of the first flow channel 26, so that the heat conduction plate 2511 performs direct heat conduction with the cooling medium 273. In this way, the cooling medium 273 can directly absorb heat on the heat conduction plate 2511, the thermal resistance is smaller, and the heat dissipation efficiency is improved. Further, a part of the inner wall of the first flow channel 26 is formed by the heat conduction plate 2511, and only a part of the inner wall of the pipeline 271 needs to be disposed alone and be connected to the heat conduction plate 2511 to form the first flow channel 26, thereby saving space occupied by the heat dissipation module 25, facilitating thinning and miniaturization of the heat dissipation module 25, and further facilitating thinning and miniaturization of the electronic device 100.

A shape of a cross segment of the first flow channel 26 may be a circle, an ellipse, a square, a triangle, a special shape, or the like. This application is described by using an example in which the cross segment of the first flow channel 26 is circular. However, this does not specifically limit this application. The cooling medium 273 may be pure water, deionized water, a water solution of ethylene (propylene) glycol, or the like. This application is described by using an example in which the cooling medium 273 is pure water. However, this does not specifically limit this application.

In some embodiments, based on the foregoing embodiments, a part of the inner wall of the first flow channel 26 is further formed by the heat spreader 2512. In this way, the cooling medium 273 in the first flow channel 26 may be further in direct contact with the heat spreader 2512, and the heat of the cooling medium 273 may be directly conducted to the heat spreader 2512, so that the thermal resistance is smaller, and the heat dissipation efficiency is improved. Compared with that the heat conduction plate 2511 is directly in heat conduction connection to the heat spreader 2512, in this embodiment, the first flow channel 26 is added and is disposed between the heat conduction plate 2511 and the heat spreader 2512. On the premise of maintaining the original heat conduction path, the cooling medium 273 in the first flow channel 26 may further absorb heat, thereby improving a heat dissipation effect of the heat dissipation module 25.

Compared with that the pipeline 271 is disposed alone to form the first flow channel 26, in this embodiment, a heat conduction path does not need to pass through the pipeline 271 used to form the first flow channel 26, and a part of the heat conduction plate 2511 and a part of the heat spreader 2512 form the inner wall of the first flow channel 26, so that the cooling medium 273 performs direct heat conduction with the heat conduction plate 2511 and the heat spreader 2512. In this way, the thermal resistance is smaller. Further, a part of the inner wall of the first flow channel 26 is formed by the heat spreader 2512, and only a part of the inner wall of the pipeline 271 needs to be disposed alone and be connected to the heat conduction plate 2511 and the heat spreader 2512 separately to form the first flow channel 26, thereby saving space occupied by the heat dissipation module 25, facilitating thinning and miniaturization of the heat dissipation module 25, and further facilitating thinning and miniaturization of the electronic device 100.

A specific structure and a disposition manner of the first flow channel 26 are described in detail below.

In some embodiments, still referring to FIG. 9, the heat conduction plate 2511 has a first surface 2511a facing the heat spreader 2512, and a third surface 2511b opposite to the first surface 2511a. The first surface 2511a is provided with a first groove 2511c. The first groove 2511c is formed by recessing the first surface 2511a along a direction close to the third surface 2511b. An opening of the first groove 2511c is located on the first surface 2511a and faces the heat spreader 2512, and the opening of the first groove 2511c is closed to form the first flow channel 26. The first groove 2511c may be processed through an etching process, a mechanical processing process, or the like.

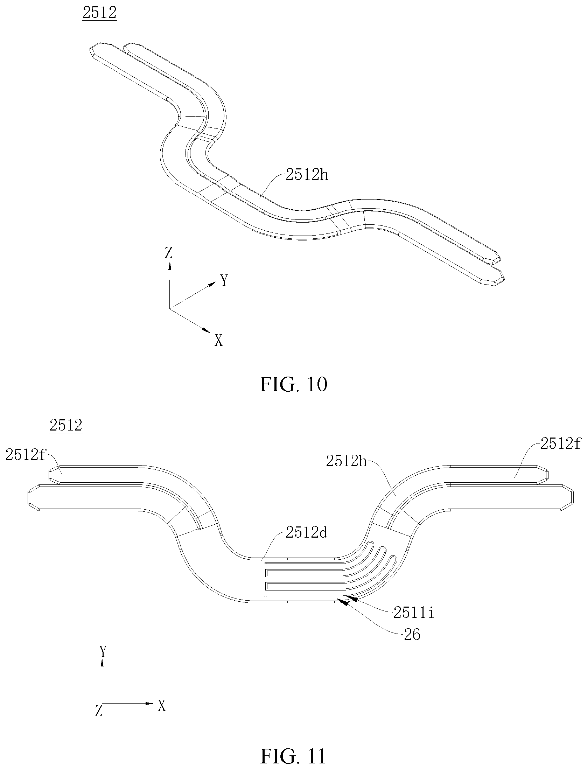

Referring to FIG. 10, FIG. 10 is a schematic structural diagram of still another heat spreader 2512 of the heat dissipation module 25 shown in FIG. 5A. The heat spreader 2512 has a second surface 2512h facing the heat conduction plate 2511. The second surface 2512h covers an opening of the first groove 2511c and forms a closed cavity with the first groove 2511c. The closed cavity forms the first flow channel 26. The heat spreader 2512 may be soldered to the first surface 2511a to close the opening of the first groove 2511c to form the first flow channel 26. The soldering method may be a soldering method such as laser soldering, resistance soldering, or brazing. In this embodiment, a soldering manner of brazing may be used. In the brazing technology, a material having a lower melting point than that of a parent material is used as a brazing material, a weldment and the brazing material are heated to a temperature higher than the melting point of the brazing material but lower than the melting point of the parent material (so that the parent material still remains in a solid state), and a joint gap is filled through wettability of the liquid brazing material. In this way, a problem that a high temperature in a soldering process causes deformation of the heat conduction plate 2511 can be avoided.

On the premise that the heat dissipation module 25 is located in the electronic device 100 and occupies a same space, disposition of the first groove 2511c can enlarge a volume of the first flow channel 26, so that a volume of the cooling medium 273 in the first flow channel 26 is larger, and in a process of using the electronic device 100, the cooling medium 273 can absorb more heat, which is beneficial to improvement in the heat dissipation efficiency of the heat dissipation module 25, and further improving the use performance of the electronic device 100. On the premise of a particular volume of the first flow channel 26, disposition of the first groove 2511c can further reduce a space occupied by the heat dissipation module 25 in the electronic device 100, which is beneficial to thinning and miniaturization of the heat dissipation module 25, and further beneficial to thinning and miniaturization of the electronic device 100.

Referring to FIG. 11, FIG. 11 is a schematic structural diagram of yet another heat spreader 2512 of the heat dissipation module 25 shown in FIG. 5A. In some embodiments, the heat spreader 2512 includes a second surface 2512h facing a first surface 2511a, the second surface 2512h is provided with a second groove 2512i, an orthographic projection of the second groove 2512i on the first surface 2511a overlaps a first groove 2511c, the first groove 2511c and the second groove 2512i define a closed cavity, and the closed cavity forms a first flow channel 26. The "overlapping" herein includes the following four cases. First, a part of the orthographic projection of the second groove 2512i on the first surface 2511a coincides with a part of the first groove 2511c; second, a part of the orthographic projection of the second groove 2512i on the first surface 2511a coincides with all of the first groove 2511c; third, all of the orthographic projection of the second groove 2512i on the first surface 2511a coincides with a part of the first groove 2511c; and fourth, the orthographic projection of the second groove 2512i on the first surface 2511a completely coincides with the first groove 2511c.

A cross segment of the first groove 2511c may be in a shape of a square, a semi-circle, a trapezoid, or the like. A cross segment of the second groove 2512i may be in a shape of a square, a semi-circle, a trapezoid, or the like. The shape of the cross segment of the first groove 2511c may be the same as or different from the shape of the cross segment of the second groove 2512i. This embodiment is described by using an example in which the shape of the cross segment of the first groove 2511c is the same as the shape of the cross segment of the second groove 2512i. The shape of the cross segment of the first groove 2511c is a semi-circle, and the diameter of the cross segment of the first groove 2511c is equal to the diameter of the cross segment of the second groove 2512i. This is merely an exemplary description, but does not specifically limit this application. The first surface 2511a is soldered to the second surface 2512h, to close the first groove 2511c and the second groove 2512i, and prevent the cooling medium 273 in the first groove 2511c and the second groove 2512i from leaking.

On the premise that the heat dissipation module 25 is located in the electronic device 100 and occupies a same space, disposition of the second groove 2512i can enlarge a volume of the first flow channel 26, so that a volume of the cooling medium 273 in the first flow channel 26 is larger, and in a process of using the electronic device 100, the cooling medium 273 can absorb more heat, which is beneficial to improvement in the heat dissipation efficiency of the heat dissipation module 25, and further improving the use performance of the electronic device 100. On the premise of a particular volume of the first flow channel 26, disposition of the second groove 2512i can further reduce a space occupied by the heat dissipation module 25 in the electronic device 100, which is beneficial to thinning and miniaturization of the heat dissipation module 25, and further beneficial to thinning and miniaturization of the electronic device 100.

It should be noted that the second groove 2512i in this embodiment may be a further improvement made based on the foregoing embodiments, and may be further used as an independent embodiment. When the second groove is used as an independent embodiment, the heat conduction plate 2511 may be not provided with the first groove 2511c, and the heat conduction plate 2511 directly covers the second groove 2512i of the heat spreader 2512, to form the first flow channel 26.

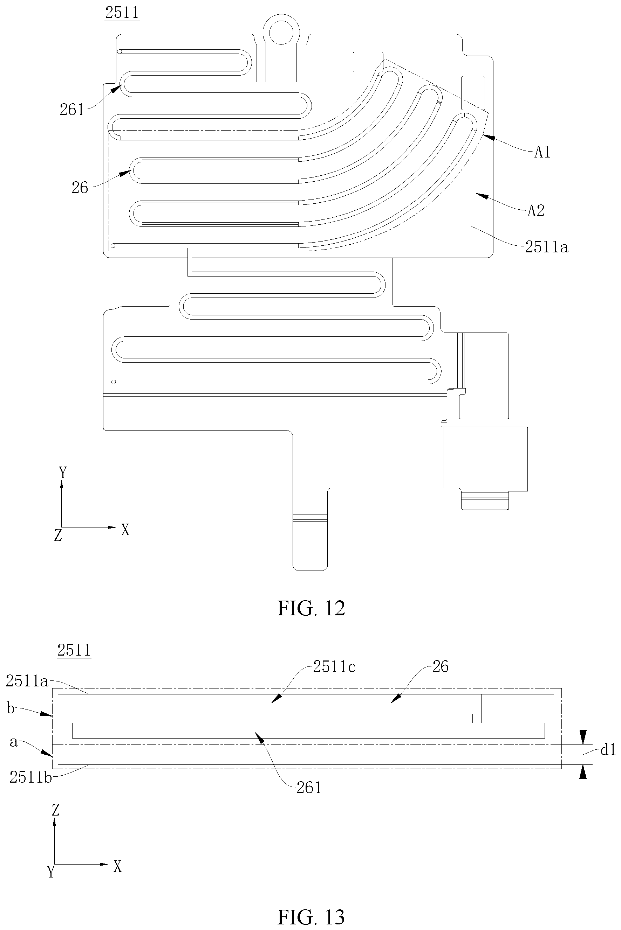

Referring to FIG. 12, FIG. 12 is a schematic structural diagram of yet another heat conduction plate 2511 of the heat dissipation module 25 shown in FIG. 5A. In some embodiments, a second flow channel 261 is formed in the heat conduction plate 2511, and the second flow channel 261 is in communication with a first flow channel 26. A first surface 2511a includes a first region A1 and a second region A2 connected to the first region A1. The first region A1 is a region of the first surface 2511a opposite to the second surface 2512h. That is, an orthographic projection of the first region A1 on the second surface 2512h is located in the second surface 2512h. Specifically, the first region A1 may be a region that is of the first surface 2511a and that adheres to the second surface 2512h. The first flow channel 26 is disposed in the first region A1. In some embodiments, the second flow channel 261 is disposed in the heat conduction plate 2511 opposite to the second region A2, that is, an orthographic projection of the second flow channel 261 on the second surface 2512h is located in the second region A2. In this way, the heat dissipation module 25 is provided with a plurality of groups of flow channels 272 to absorb heat, that is, the first flow channel 26 and the second flow channel 261 jointly absorb heat, thereby improving the heat dissipation efficiency of the heat dissipation module 25, and further improving the use performance of the electronic device 100.

Referring to FIG. 13, FIG. 13 is a main view of a heat conduction plate 2511 of the heat dissipation module 25 shown in FIG. 5A. In some other embodiments, at least a part of the second flow channel 261 and the first flow channel 26 are spaced apart in a thickness direction of the heat conduction plate 2511, that is, a direction of a Z axis in FIG. 13. A plurality of layers of three-dimensional flow channels 272 is formed inside the heat conduction plate 2511. In this way, a total volume of the first flow channel 26 and the second flow channel 261 is further increased, and a volume of the cooling medium 273 in the first flow channel 26 and the second flow channel 261 is also larger. The first flow channel 26 and the second flow channel 261 jointly absorb more heat, thereby improving the heat dissipation efficiency of the heat dissipation module 25, and further improving the use performance of the electronic device 100.

In some embodiments, an arrangement direction of the heat conduction plate 2511 and the heat spreader 2512 is a first direction, that is, a thickness direction of the heat conduction plate 2511, that is, the direction of the Z axis in FIG. 13. The heat conduction plate 2511 includes a first part a and a second part b that are stacked along the first direction. The first part a is close to the heat generating element 3 and is in heat conduction connection to the heat generating element 3. The second part b is close to the heat spreader 2512. A thickness d1 of the first part a is greater than or equal to 0.5 micrometer.

The first part a is a solid structure without a hollow structure inside. The heat conduction plate 2511 is in heat conduction connection to the heat generating element 3 by using the first part a. The first part a more uniformly conducts heat of the heat generating element 3 to the whole heat conduction plate 2511. If heat conduction connection to the heat generating element 3 is performed by using a hollow structure or the first flow channel 26 is disposed on a side close to the heat generating element 3, a problem of uneven heat conduction between the heat conduction plate 2511 and the heat generating element 3 is caused. In addition, the thermal resistance of the first part a is smaller than the thermal resistance of the cooling medium 273. The first part a is in heat conduction connection to the heat generating element 3, so that the efficiency of heat conduction between the heat conduction plate 2511 and the heat generating element 3 can also be improved, thereby helping improve the heat dissipation efficiency of the heat dissipation module 25.

The second part b is located on a side of the first part a that faces away from the heat generating element 3, and the first part a and the second part b may be an integral structural member. The first flow channel 26 and the second flow channel 261 are disposed in the second part b, and a part of an inner wall of the second part b forms an inner wall of the first flow channel 26. The heat of the heat generating element 3 is first conducted to the first part a, and the first part a conducts the heat to the whole heat conduction plate 2511. That is, the heat is conducted to the second part b by using the first part a, and the second part b is used to form the first flow channel 26 and the second flow channel 261. The cooling medium 273 in the first flow channel 26 and the second flow channel 261 absorbs the heat to implement heat dissipation. In this way, improvement in efficiency of heat conduction of the heat generating element 3 is facilitated, to improve efficiency of heat dissipation of the heat dissipation module 25, thereby further improving the use performance of the electronic device 100.

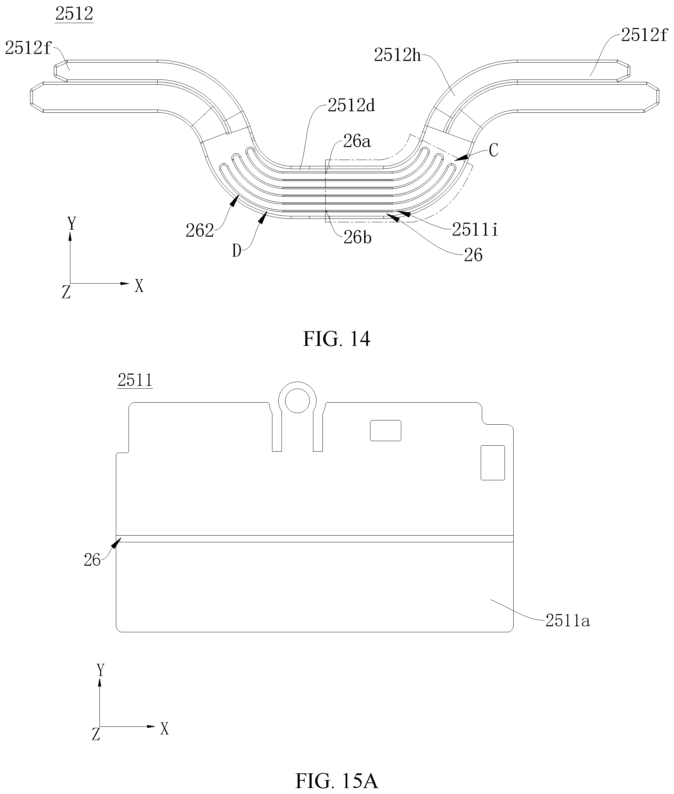

In some embodiments, referring to FIG. 14, FIG. 14 is a schematic structural diagram of yet another heat spreader 2512 of the heat dissipation module 25 shown in FIG. 5A. a third flow channel 263 is further formed in the heat spreader 2512, and the third flow channel 263 is in communication with the first flow channel 26. Specifically, the heat spreader 2512 may include a third region C and a fourth region D connected to the third region C. The third region C is a region of the heat spreader 2512 opposite to the heat conduction plate 2511. That is, an orthographic projection of the third region C on the heat conduction plate 2511 overlaps the first surface 2511a, or an orthographic projection of the third region C on the heat conduction plate 2511 overlaps the first region A1. A part, used for forming the first flow channel 26, of the heat spreader 2512 is located in the third region C. The third flow channel 263 may be disposed in the fourth region D, to enlarge a cooling area of the cooling medium 273. In this way, the heat dissipation module 25 is provided with a plurality of groups of flow channels 272 to absorb heat, that is, the first flow channel 26, the second flow channel 261, and the third flow channel 263 jointly absorb heat, thereby improving the heat dissipation efficiency of the heat dissipation module 25, and further improving the use performance of the electronic device 100.

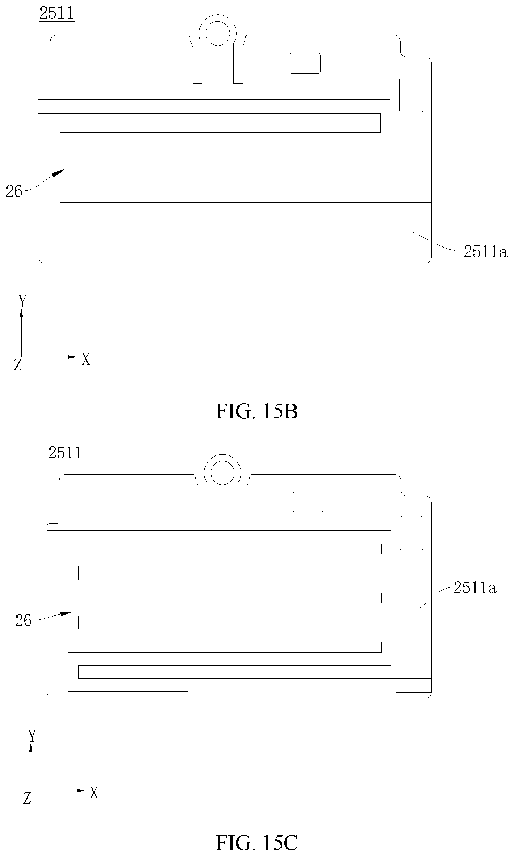

In some embodiments, referring to FIG. 15A, FIG. 15B, and FIG. 15C. FIG. 15A is a schematic structural diagram of yet another heat conduction plate 2511 of the heat dissipation module 25 shown in FIG. 5A; FIG. 15B is a schematic structural diagram of yet another heat conduction plate 2511 of the heat dissipation module 25 shown in FIG. 5A; and FIG. 15C is a schematic structural diagram of yet another heat conduction plate 2511 of the heat dissipation module 25 shown in FIG. 5A. The first flow channel 26, the second flow channel 261, and the third flow channel 263 may extend along a straight line or a curve. Specifically, the first flow channel 26 is S-shaped or spiral, the second flow channel 261 is S-shaped or spiral, and the third flow channel 263 is S-shaped or spiral. Extension paths of the first flow channel 26, the second flow channel 261, and the third flow channel 263 may be the same or may be different. In this way, in a limited volume, the serpentine or spiral flow channel 272 can further increase volumes of the first flow channel 26, the second flow channel 261, and the third flow channel 263, and further increase a volume of the cooling medium 273. Therefore, the heat dissipation efficiency of the heat dissipation module 25 is further improved, which helps improve the use performance of the electronic device 100.

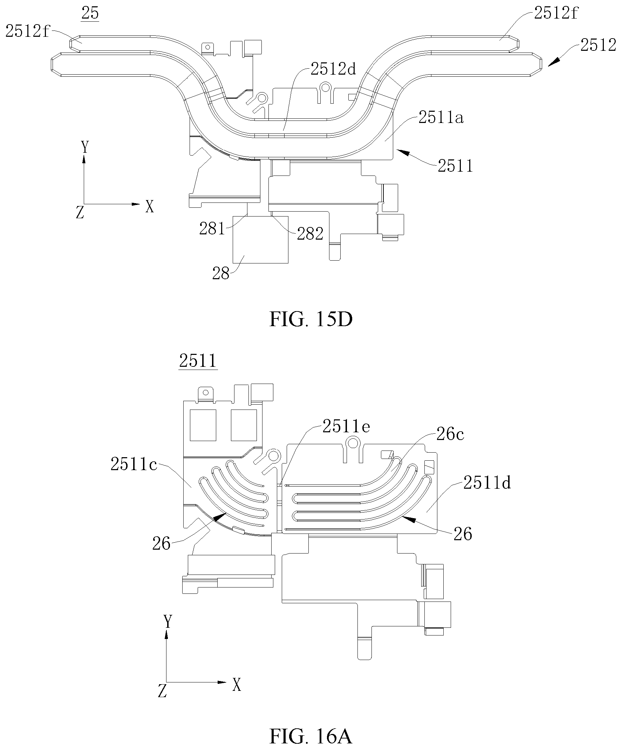

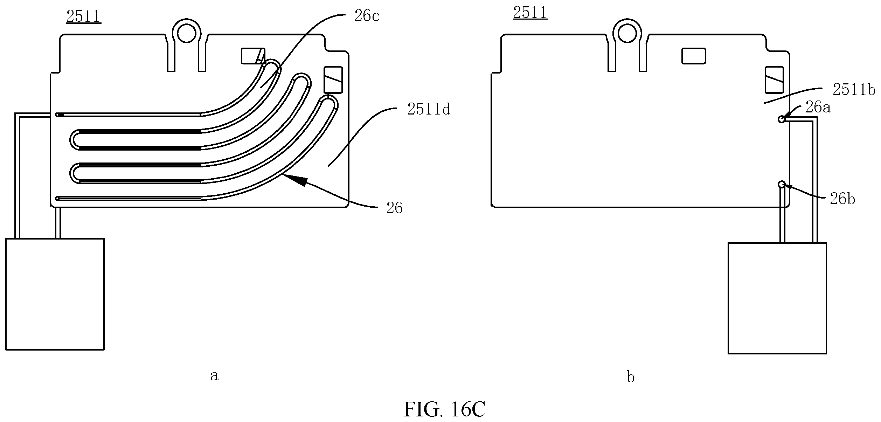

Referring to FIG. 15D and FIG. 16A together, FIG. 16A is a schematic structural diagram of yet another heat conduction plate 2511 of the heat dissipation module 25 shown in FIG. 5A. The first flow channel 26 includes a plurality of sub-segments 26c that are in communication with each other, and the sub-segments 26c extend along an extension path of the heat spreader 2512. An extension path of the heat spreader 2512 is a path from the evaporation segment 2512d to the condensation segment 2512f. Specifically, an extension path of the heat spreader 2512 may be an upper edge or a lower edge of the heat spreader 2512 in the direction of the Y axis. That is, an extension path of the sub-segment 26c may be consistent with an extension path of the upper edge or the lower edge. A length of the heat spreader 2512 in the extension path is larger than a size in a width direction of the heat spreader 2512. In this way, compared with that the first flow channel 26 extends along another direction of the heat spreader, that the first flow channel 26 extends along the extension path of the heat spreader 2512 can increase a length of each sub-segment 26c of the first flow channel 26, thereby reducing process difficulty. Because the width of the heat spreader 2512 in the direction of the Y axis is small, the first flow channel 26 can only be processed into a plurality of bent small segments with a large processing difficulty, and the flow resistance of the cooling medium in the first flow channel 26 is increased. The first flow channel 26 may further include a plurality of connection segments, and two adjacent sub-segments 26c are in communication with each other by using a connection segment.

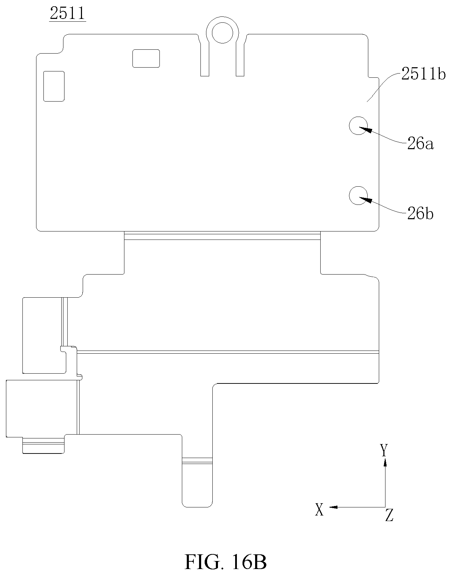

In some embodiments, referring to FIG. 15D, FIG. 16A, and FIG. 16B together, FIG. 15D is a schematic structural diagram of a heat dissipation module 25 according to some other embodiments of this application; and FIG. 16B is a schematic structural diagram of a back side of one heat conduction plate 2511 shown in FIG. 16A. The heat conduction plate 2511 further includes a liquid inlet channel and a liquid outlet channel, and the liquid inlet channel and the liquid outlet channel are separately in communication with the first flow channel 26. The heat conduction plate 2511 further includes a third surface 2511b opposite to the first surface 2511a, the liquid inlet channel runs through the first surface 2511a and the third surface 2511b, and the liquid outlet channel runs through the first surface 2511a and the third surface 2511b. The liquid inlet channel extends to the third surface 2511b to form a liquid inlet 26a, and the liquid outlet channel extends to the third surface 2511b to form a liquid outlet 26b. For the cooling medium 273 in the first flow channel 26, an exchange of the cooling medium 273 may be implemented by using the liquid inlet 26a and the liquid outlet 26b. In one embodiment, the liquid inlet 26a and the liquid outlet 26b may be disposed on the third surface 2511b. The first surface 2511a is used for forming the first flow channel 26. Compared with the first surface 2511a, the third surface 2511b has a larger region for disposing the liquid inlet 26a and the liquid outlet 26b. In addition, disposing the liquid inlet 26a and the liquid outlet 26b on the third surface may also avoid interference with the heat spreader 2512 during mounting, further facilitating layout of electronic components inside the electronic device 100.

However, this does not specifically limit this application. That is, the liquid inlet 26a and the liquid outlet 26b may alternatively be disposed on the first surface 2511a and a side surface of the heat conduction plate 2511. The side surface herein refers to a surface of the heat conduction plate 2511 that connects the first surface 2511a and the third surface 2511b.

Further, referring to FIG. 4 and FIG. 16C together, FIG. 16C is a schematic structural diagram of a connection between a heat conduction plate 2511 and a drive apparatus 28 according to some embodiments of this application. In FIG. 16C, the figure a is a main view of the heat conduction plate 2511, and the figure b is a rear view of the heat conduction plate 2511. The heat dissipation module 25 further includes a drive apparatus 28, and the drive apparatus 28 is configured to drive the cooling medium 273 to circulate. Still referring to FIG. 15D, the drive apparatus 28 includes an inlet 281 and an outlet 282. The inlet 281 is in communication with the liquid outlet 26b, and the outlet 282 is in communication with the liquid inlet 26a. The drive apparatus 28 may be a circulation pump, a pressure boosting pump, or the like. In this way, the cooling medium 273 absorbs heat, so that heat of the heat conduction plate 2511 is reduced, and the drive apparatus 28 drives the cooling medium 273 to circulate in the first flow channel 26, the second flow channel 261, and the third flow channel 263, thereby accelerating heat transfer.

Still referring to FIG. 16C, the heat dissipation module 25 further includes a liquid inlet pipeline 283 and a liquid outlet pipeline 284, the drive apparatus 28 includes an inlet 281 and an outlet 282, the liquid inlet pipeline 283 is connected between the outlet 282 and the liquid inlet channel, and the liquid outlet pipeline 284 is connected between the inlet 281 and the liquid outlet channel. The cooling medium flows out through the outlet of the drive apparatus 28 and enters the liquid inlet pipeline 283, and then the cooling medium is in communication with the first flow channel 26 through the liquid inlet pipeline 283. After the cooling medium flowing through the first flow channel 26 flows out through the liquid outlet channel, the cooling medium returns to the drive apparatus 28 through the liquid outlet pipeline 284, and the foregoing process is circulated to absorb heat.

In some embodiments, referring back to FIG. 16A, the heat dissipation module 25 further includes a first connection pipeline 2511e, at least two heat conduction plates 2511 are provided, and first flow channels 26 of adjacent heat conduction plates 2511 are in communication with each other by using the first connection pipeline 2511e. Specifically, the heat conduction plate 2511 may include a first heat conduction 2511c and a second heat conduction plate 2511d. The first heat conduction plate 2511c and the second heat conduction plate 2511d are each provided with a first flow channel 26. The first channel 26 of the first heat conduction plate 2511c is in communication with the first flow channel 26 of the second heat conduction plate 2511d by using the first connection pipeline 2511e. The first connection pipeline 2511e may be a hose, a brass pipe, or the like. In this application, an example in which the first connection pipeline 2511e is a hose is used for description. However, this does not specifically limit this application. There are N heat conduction plates 2511, adjacent heat conduction plates 2511 are in communication with each other by using a first connection pipeline 2511e, and there are N-1 first connection pipelines 2511e.

In this way, a first flow channel 26 is disposed on each of a plurality of heat conduction plates 2511, and the heat on the heat conduction plates 2511 is jointly absorbed by using a plurality of first flow channels 26, so that a total volume of the first flow channels 26 is further increased, a volume of the cooling medium 273 in the first flow channels 26 is also larger, and the first flow channels 26 jointly absorb more heat, thereby improving the heat dissipation efficiency of the heat dissipation module 25, and further improving the use performance of the electronic device 100.

In some other embodiments, the liquid outlet pipeline 284 is connected between the outlet 282 and the liquid inlet channel, and the liquid inlet pipeline 283 may be further connected between the inlet 281 and one end of the first connection pipeline 2511e that faces away from the first flow channel 26.

The following describes the heat sink 252 in the heat dissipation module 25 in detail.

In some embodiments, referring back to FIG. 4, the heat dissipation module 25 further includes a heat sink 252, the heat spreader 2512 has a condensation segment 2512e, and the condensation segment 2512e is in heat conduction connection to the heat sink 252. The condensation segment 2512f of the heat spreader 2512 forms the condensation segment 2512e.

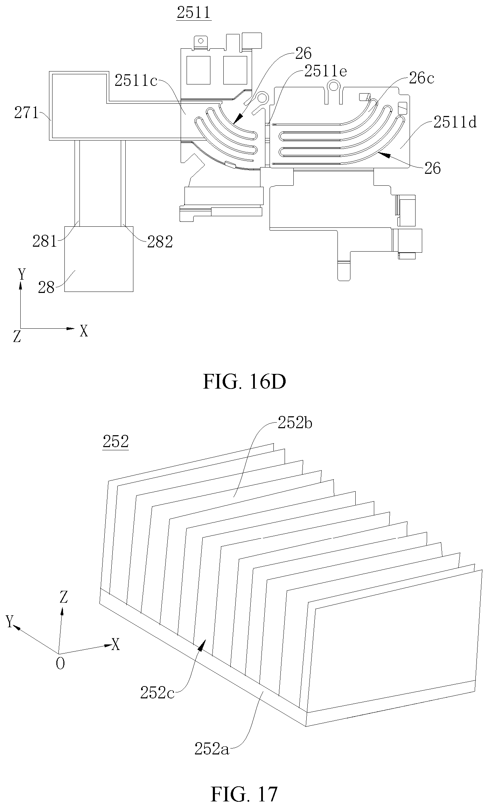

Referring to FIG. 17, FIG. 17 is a schematic structural diagram of a heat sink 252 in the heat dissipation module 25 shown in FIG. 4. The heat sink 252 may include a heat dissipation base 252a and a plurality of heat dissipation fins 252b. The heat dissipation base 252a is in heat conduction connection to the condensation segment 2512f of the heat spreader 2512. Each heat dissipation fin 252b is fixed to the heat dissipation base 252a, and the plurality of heat dissipation fins 252b are spaced apart on the heat dissipation base 252a. For example, the heat dissipation base 252a is formed into a rectangular plate-shaped structure. The length direction of the heat dissipation base 252a is parallel to the direction of the X axis. The width direction of the heat dissipation base 252a is parallel to the direction of the Y axis. The width direction of the heat dissipation base 252a is parallel to the direction of the Z axis.

The plurality of heat dissipation fins 252b may be spaced apart in the length direction of the heat dissipation base 252a. A heat dissipation channel 252c is defined between two adjacent heat dissipation fins 252b. When air flows through the heat dissipation channel 252c, the air may exchange heat with the heat dissipation fins 252b, and then heat from the heat dissipation fins 252b may be carried to the outside of the electronic device 100 by using the air.

Optionally, each heat dissipation fin 252b is disposed perpendicular to the heat dissipation base 252a. In this way, the structure of the heat sink 252 may be more compact. This is beneficial to enlarging a heat dissipation area of the heat sink 252, and further can improve a heat dissipation performance of the heat dissipation module 25, to improve the performance of the electronic device 100. It may be understood that, the heat dissipation base 252a and the heat dissipation fins 252b may have an integral structure, or may have a split structure. In addition, the heat sink 252 is configured to dissipate heat from the heat generating element 3. When satisfying the requirement, the heat sink 252 may alternatively have another structure, and is not limited to this embodiment.

Referring back to FIG. 16D, FIG. 16D is a schematic structural diagram of yet another heat conduction plate 2511 of the heat dissipation module 25 shown in FIG. 5A. In some embodiments, the heat dissipation module 25 may further include a second connection pipeline 271, the second connection pipeline 271 is located between the condensation segment 2512e and the heat sink 252, and the second connection pipeline 271 is in communication with the first flow channel 26. When flowing to the heat conduction plate 2511 and the heat spreader 2512, the cooling medium 273 absorbs heat from the heat conduction plate 2511 and the heat spreader 2512. Driven by the drive apparatus 28, the cooling medium 273 circulates in the first flow channel 26, and the cooling medium 273, after absorbing some heat, flows to the heat sink 252. A temperature of the cooling medium 273 is higher than a temperature of the heat sink 252, and heat exchange is performed between the cooling medium 273 and the heat sink 252. In a process of the heat exchange, the temperature of the cooling medium 273 decreases. Driven by the drive apparatus 28, the cooling medium 273 continues to flow back to the heat conduction plate 2511 and the heat spreader 2512, to continue the foregoing process of absorbing heat.

In this way, the first flow channel 26 extends to the heat sink 252, and the heat sink 252 dissipates heat from the cooling medium 273 in the first flow channel 26, thereby further improving the heat dissipation efficiency of the heat dissipation module 25, and further improving the use performance of the electronic device 100.

In some embodiments, the liquid inlet pipeline 283 may be further connected between the outlet 282 and the second connection pipeline 271, and the liquid outlet pipeline 284 may be further connected between the inlet 281 and one end of the first flow channel 26. The drive apparatus 28 drives the cooling medium to flow in the first flow channel 26. In this way, the cooling medium 273 absorbs heat, so that heat of the heat conduction plate 2511 is reduced, and the drive apparatus 28 drives the cooling medium 273 to circulate in the first flow channel 26, the second flow channel 261, and the third flow channel 263, thereby accelerating heat transfer.

In some other embodiments, the liquid inlet pipeline 283 and the liquid outlet pipeline 284 may be disposed on any segment of pipeline in communication with the first flow channel 26, as long as it can be ensured that the drive apparatus 28 drives the cooling medium to flow in the first flow channel 26.

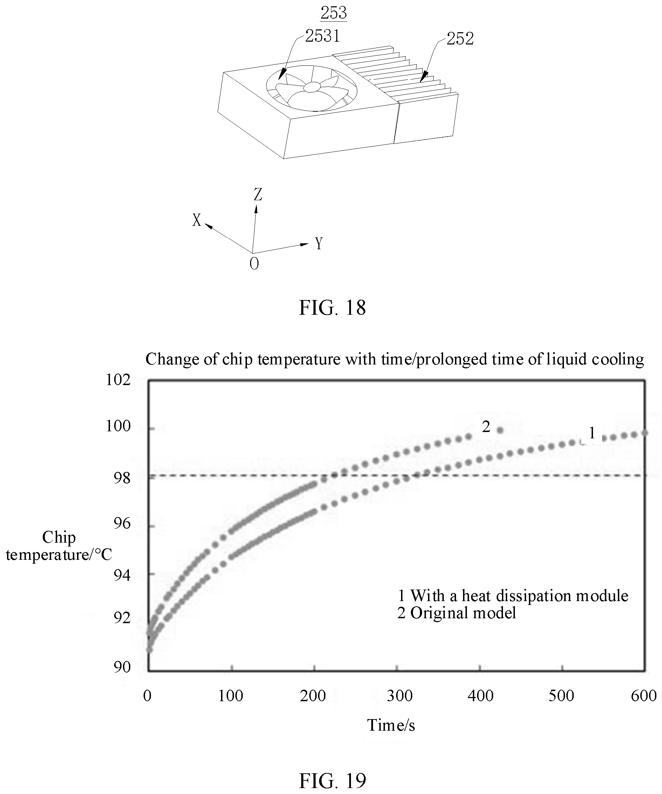

In some embodiments, referring back to FIG. 4, to further improve the heat dissipation performance of the heat dissipation module 25, the heat dissipation module 25 further includes a fan 253. Referring to FIG. 18, FIG. 18 is a schematic structural diagram of a fan 253 in the heat dissipation module 25 shown in FIG. 4. The fan 253 has a fan 253 inlet 281 and a fan outlet 2531, and the heat sink 252 is located at the fan outlet 2531 of the fan 253.

The fan 253 is disposed in the accommodating space 21a, and the housing 21 of the electronic device 100 further includes a heat dissipation hole and an air inlet. The fan 253 inlet 281 is in communication with the air inlet, the fan outlet 2531 is in communication with the heat dissipation hole, and the heat sink 252 is located between the fan outlet 2531 and the heat dissipation hole. The fan 253 is configured to drive an air flow to flow from the air inlet to the heat dissipation hole. In this way, under driving of the fan 253, the air flow enters the accommodating space 21a from the air inlet, and flows to the fan outlet 2531 through the fan 253 inlet 281 of the fan 253. After the air flow blown out from the fan outlet 2531 exchanges heat with the heat sink 252, the air flow flows to the heat dissipation hole, and is discharged to the outside of the electronic device 100 through the heat dissipation hole. Therefore, by disposing the fan 253, a flow rate of the air flow in the accommodating space 21a can be improved, thereby improving a heat dissipation performance of the heat dissipation module 25.

Optionally, the fan outlet 2531 is disposed opposite to the heat dissipation hole. That is, an orthographic projection of the fan outlet 2531 on a plane in which the heat dissipation hole is located overlaps the fan outlet 2531. In this way, after exchanging heat with the heat sink 252, an air flow blown from the fan outlet 2531 can be directly blown to a heat dissipation hole, reducing flow resistance of the air flow, and helping reduce noise of the heat dissipation module 25. In addition, the heat exchange efficiency between the air flow and the heat sink 252 can be improved, thereby further improving the heat dissipation performance of the heat dissipation module 25.

In some embodiments, referring back to FIG. 5A, there are two heat spreaders 2512 and two heat sinks 252. For ease of description, the two heat spreaders 2512 are respectively referred to as a "first heat spreader" and a "second heat spreader", and the two heat sinks 252 are respectively referred to as a "first heat sink" and a "second heat sink". Both of an evaporation segment 2512d of the first heat spreader 2512 and an evaporation segment 2512d of the second heat spreader 2512 are connected to the heat conduction plate 2511, and the evaporation segment 2512d of the first heat spreader 2512 and the evaporation segment 2512d of the second heat spreader 2512 are spaced apart from each other. A condensation segment 2512f of the first heat spreader 2512 and a condensation segment 2512f of the second heat spreader 2512 respectively extend toward directions facing away from each other. The first heat sink is connected to the condensation segment 2512f of the first heat spreader 2512, and the second heat sink is connected to the condensation segment 2512f of the second heat spreader 2512. Therefore, by disposing the two heat spreaders 2512 (that is, the first heat spreader 2512 and the second heat spreader 2512) and the two heat sinks 252 (that is, the first heat sink and the second heat sink), the heat dissipation performance of the heat dissipation module 25 can be improved, thereby improving the performance of the electronic device 100.

When the heat dissipation module 25 is used, a heat dissipation method for the heat dissipation module 25 includes the following steps:

The central processing unit detects an overclocking mode of the electronic device 100, and controls the drive apparatus 28 to start, and the drive apparatus 28 drives the cooling medium 273 to flow in the first flow channel 26.

The central processing unit obtains a first temperature. The first temperature is a temperature of the heat generating element. The first temperature may be detected by disposing a temperature sensor, and the temperature sensor measures the first temperature in real time.

The drive apparatus 28 is controlled to stop working if the first temperature is less than a threshold temperature; and the drive apparatus 28 continues to work if the first temperature is greater than the threshold temperature. Two situations may be specifically included herein. First, the drive apparatus 28 is controlled to stop working if the first temperature is less than or equal to the threshold temperature; and the drive apparatus 28 continues to work if the first temperature is greater than the threshold temperature. Second, the drive apparatus 28 is controlled to stop working if the first temperature is less than a threshold temperature; and the drive apparatus 28 continues to work if the first temperature is greater than or equal to the threshold temperature. One of the foregoing two situations may be selected. The threshold temperature may be greater than or equal to 50 degrees and less than or equal to 80 degrees.

A temperature rising time for the CPU to reach a limiting temperature when the electronic device 100 has or does not have the foregoing heat dissipation module 25 is tested. Referring to FIG. 19 and Table 1, FIG. 19 is a comparison diagram of a temperature rise time for a CPU to reach a limiting temperature when an electronic device 100 of this application has or does not have the foregoing heat dissipation module 25. Table 1 is a comparison between a temperature rise time of an existing heat dissipation module 25 and a temperature rise time of the foregoing heat dissipation module 25. A curve 1 in FIG. 19 is a curve of a temperature rise time when the CPU reaches a limiting temperature when the foregoing heat dissipation module 25 is provided. A curve 2 in FIG. 19 is a curve of a temperature rise time when the CPU reaches a limiting temperature when the existing heat dissipation module 25 is provided. Basic power consumption of the electronic device 100 is 10W, and power consumption in an overclocking mode is set to 15W. First, the CPU chip is run under a basic power consumption condition, and reaches a basic temperature of approximately 90°C, and then the CPU chip is run under the power consumption in the overclocking mode. 98.2°C is used as the limiting temperature of the CPU. A temperature rise time in which 98.2°C is reached when the foregoing heat dissipation module 25 is present or absent, and a temperature rise time in which 98.2°C is reached after the foregoing heat dissipation module 25 is disposed are observed. After the electronic device 100 has the power consumption in the overclocking mode, the foregoing heat dissipation module 25 starts to work. The heat dissipation module 25 dissipates heat for the electronic device 100. A time in which the electronic device 100 has the temperature rising to 98.2°C under a heat dissipation effect of the heat dissipation module 25 is up to 337s, which is increased by 100s of high-power running duration compared with a system without liquid cooling.

Therefore, the foregoing heat dissipation module 25 has higher heat dissipation efficiency, which is beneficial to improvement in the use performance of the electronic device 100. After reaching the limit temperature of 98.2°C, the electronic device 100 enters a working state of basic power consumption. In this case, the temperature of the electronic device 100 is still a high temperature, and the heat dissipation module 25 continues to work. When the temperature of the electronic device 100 decreases to the threshold temperature, the heat dissipation module 25 stops working. After the electronic device 100 enters a next round of overclocking mode, the heat dissipation module 25 repeats the foregoing working process.

**Table 1: Comparison between a temperature rise time of an existing heat dissipation module and a temperature rise time of the foregoing heat dissipation module**

| | Existing heat dissipation module | With the foregoing heat dissipation module |
|---|---|---|
| Initial field temperature/°C | 88.7 | 88.2 |
| Initial field time/s | 0 | 0 |
| Limiting temperature/°C | 98.2 | 98.2 |
| Temperature rise time/s | 237 | 337 |

In the descriptions of this specification, specific features, structures, materials, or characteristics may be combined in a proper manner in any one or more of embodiments or examples.

Finally, it should be noted that, the foregoing embodiments are merely used for describing the technical solutions of this application, but are not intended to limit this application. Although this application is described in detail with reference to the foregoing embodiments, a person of ordinary skill in the art should understand that modifications can still be made to the technical solutions described in the foregoing embodiments, or equivalent substitutions can be made to some of the technical features. However, these modifications or substitutions do not make the essence of the corresponding technical solutions depart from the spirit and scope of the technical solutions in embodiments of this application.

## Claims

1. A heat dissipation module, comprising:
a heat conduction plate;
a heat spreader, wherein the heat spreader is located on a side of the heat conduction plate and is in heat conduction connection to the heat conduction plate; and
a first flow channel, wherein the first flow channel is located between the heat conduction plate and the heat spreader; and
the heat conduction plate has a first surface facing the heat spreader, the first flow channel extends on the first surface, a part of an inner wall of the first flow channel is formed by the first surface, and a cooling medium is provided in the first flow channel.

2. The heat dissipation module according to claim 1, wherein a part of the inner wall of the first flow channel is formed by the heat spreader.

3. The heat dissipation module according to claim 1 or 2, wherein the first surface is provided with a first groove, an opening of the first groove faces the heat spreader, and the opening of the first groove is closed to form the first flow channel.

4. The heat dissipation module according to claim 3, wherein the heat spreader has a second surface facing the heat conduction plate, and the second surface covers the opening of the first groove and forms the first flow channel with the first groove.

5. The heat dissipation module according to claim 4, wherein the second surface is provided with a second groove, an orthographic projection of the second groove on the first surface overlaps the first groove, and the first groove and the second groove define the first flow channel.

6. The heat dissipation module according to claim 2, wherein the heat conduction plate has a first surface facing the heat spreader; and
the heat spreader has a second surface facing the heat conduction plate, the second surface is provided with a second groove, an opening of the second groove faces the heat conduction plate, and the first surface covers the opening of the second groove and defines the first flow channel with the second groove.

7. The heat dissipation module according to any one of claims 1 to 6, wherein
a second flow channel is formed in the heat conduction plate, all of an inner wall of the second flow channel is formed by the heat conduction plate, and the second flow channel is in communication with the first flow channel.

8. The heat dissipation module according to claim 7, wherein at least a part of the second flow channel and the first flow channel are spaced apart in a thickness direction of the heat conduction plate.

9. The heat dissipation module according to any one of claims 1 to 8, wherein the heat conduction plate comprises a first part and a second part that are stacked, the first part is located on a side of the second part that faces away from the heat spreader, a thickness of the first part is greater than or equal to 0.5 micrometer, and the first flow channel is located on the second part.

10. The heat dissipation module according to any one of claims 1 to 9, wherein a third flow channel is formed in the heat spreader, and the third flow channel is in communication with the first flow channel.

11. The heat dissipation module according to any one of claims 1 to 10, wherein the first flow channel comprises a plurality of sub-segments that are in communication with each other, and the sub-segments extend along an extension path of the heat spreader.

12. The heat dissipation module according to any one of claims 1 to 11, wherein the heat conduction plate further comprises a liquid inlet channel and a liquid outlet channel, and the liquid inlet channel and the liquid outlet channel are separately in communication with the first flow channel.

13. The heat dissipation module according to claim 12, wherein the heat conduction plate further comprises a third surface disposed opposite to the first surface, the liquid inlet channel runs through the first surface and the third surface, and the liquid outlet channel runs through the first surface and the third surface.

14. The heat dissipation module according to claim 12, wherein the heat conduction plate further comprises a third surface disposed opposite to the first surface, and a side surface connected between the first surface and the third surface, and the liquid inlet channel and the liquid outlet channel are disposed on the side surface.

15. The heat dissipation module according to any one of claims 12 to 14, wherein the heat dissipation module further comprises a drive apparatus, the drive apparatus is in communication with the first flow channel, and the drive apparatus is configured to drive the cooling medium to circulate.

16. The heat dissipation module according to claim 15, wherein the heat dissipation module further comprises a liquid inlet pipeline and a liquid outlet pipeline, the drive apparatus comprises an inlet and an outlet, the liquid inlet pipeline is connected between the outlet and the liquid inlet channel, and the liquid outlet pipeline is connected between the inlet and the liquid outlet channel.

17. The heat dissipation module according to any one of claims 1 to 16, wherein the heat dissipation module further comprises a first connection pipeline, at least two heat conduction plates are provided, and first flow channels of adjacent heat conduction plates are in communication with each other by using the first connection pipeline.

18. The heat dissipation module according to any one of claims 1 to 17, wherein the heat dissipation module further comprises a heat sink, the heat spreader comprises an evaporation segment and a condensation segment, the evaporation segment is in heat conduction connection to the heat conduction plate, and the condensation segment is in heat conduction connection to the heat sink.

19. The heat dissipation module according to claim 18, wherein the heat dissipation module further comprises a second connection pipeline, the second connection pipeline is located between the condensation segment and the heat sink, and the second connection pipeline is in communication with the first flow channel.

20. The heat dissipation module according to claim 19, wherein the heat dissipation module further comprises a drive apparatus, the drive apparatus is in communication with the second connection pipeline, and the drive apparatus is configured to drive the cooling medium to circulate.

21. A heat dissipation module, comprising:
a heat conduction plate, wherein the heat conduction plate is configured to be in heat conduction connection to a heat generating element;
a heat spreader, wherein the heat spreader is located on a side of the heat conduction plate facing away from the heat generating element and is in heat conduction connection to the heat conduction plate; and
a first flow channel, wherein the first flow channel is located between the heat conduction plate and the heat spreader, a part of an inner wall of the first flow channel is formed by the heat spreader, and a cooling medium is provided in the first flow channel.

22. An electronic device, comprising:
a housing, wherein the housing has an accommodating space;
the heat dissipation module according to any one of claims 1 to 21;
a heat generating element, wherein the heat generating element is disposed in the accommodating space, and the heat generating element is located on a side of the heat conduction plate facing away from the heat spreader and is in heat conduction connection to the heat conduction plate.

23. A heat dissipation method, applied to an electronic device, wherein the electronic device comprises a housing, a heat generating element, and a heat dissipation module, wherein the housing has an accommodating space; the heat generating element and the heat dissipation module are disposed in the accommodating space; the heat dissipation module comprises a heat conduction plate, a heat spreader, and a first flow channel, and a drive apparatus, and the heat conduction plate is configured to be in heat conduction connection to the heat generating element; the heat spreader is located on a side of the heat conduction plate facing away from the heat generating element and is in heat conduction connection to the heat conduction plate; the first flow channel is located between the heat conduction plate and the heat spreader, a part of an inner wall of the first flow channel is formed by the heat conduction plate, and a cooling medium is provided in the first flow channel; and the drive apparatus is configured to drive the cooling medium to circulate; and
the method comprises:
controlling, when the electronic device enters an overclocking mode, the drive apparatus to start, and driving, by the drive apparatus, the cooling medium to flow in the first flow channel;
obtaining a first temperature, wherein the first temperature is a temperature of the heat generating element;
controlling the drive apparatus to stop working if the first temperature is less than a threshold temperature; and continuing, by the drive apparatus, to work if the first temperature is greater than the threshold temperature.

24. The method according to claim 23, wherein the threshold temperature is greater than or equal to 50 degrees and less than or equal to 80 degrees.
